# EUROPEAN PATENT APPLICATION

(11) **EP 3 614 528 A1**
(43) Date of publication of application: **26.02.2020**
(21) Application number: 17800993.2
(22) Date of filing: 07.09.2017
(51) Int. Cl.: H02J 50/90, H02J 50/40, H02J 50/12, H02M 7/48, H01F 38/14, H01F 1/03

(54) **WIRELESS CHARGING METHOD AND APPARATUS USING TWO-DIMENSIONAL CIRCULAR ARRAY STRUCTURE FORMING CHARGING SPACE HAVING UNIFORM ENERGY DENSITY**

(30) Priority: 21.04.2017 KR 20170051818; 03.07.2017 KR 20170084264
(71) Applicant: Electronics and Telecommunications Research Institute, Daejeon 34129 (KR)
(72) Inventor: KIM, Sang Won, Daejeon 34129 (KR); KIM, Seong Min, Daejeon 34129 (KR); MOON, Jung Ick, Daejeon 34129 (KR); CHO, In Kui, Daejeon 34129 (KR)
(74) Representative: Betten & Resch
(86) International application number: PCT/KR2017/009796
(87) International publication number: WO 2018/194223

(57) **Abstract**

Disclosed is a wireless charging method and apparatus in a two-dimensional (2D) circular array structure that may form charging areas uniform in energy density. The wireless charging method includes receiving a current by a plurality of transmitting coils, and generating a three-dimensional (3D) wireless charging area that is available for wireless charging in a 3D space using a rotating magnetic field and a vertical magnetic field by the transmitting coils that are arranged in a circular form on a 2D plane.

## Description

### Technical Field

Example embodiments relate to a wireless charging method and apparatus for generating a uniform charging area in a three-dimensional (3D) space by arranging transmitting coils on a two-dimensional (2D) plane.

### Background Art

Recently, the demand for various types of portable electronic devices is increasing explosively, and the preference to medium- and small-sized drones and electrically-powered personal transportation means, for example, bicycles, quickboards, and electric wheels, is also increasing along with the development of information technology (IT).

In general, portable electronic devices use batteries with wired chargers. However, wired charging may be inconvenient to use, and thus research has been steadily conducted to develop various wireless charging methods in order to resolve such inconvenience of the wired charging.

There is a magnetic induction-based wireless charging method among the various wireless charging methods. However, it may not be effective due to a limit of a distance between transmission and reception, and because wireless charging is enabled only under a specific condition, for example, a two-dimensional (2D) pad structure, that transmitting and receiving resonators need to be arranged directly facing each other and, if not arranged facing each other, the wireless charging is not performed. Thus, it is inconvenient to use, and a charging distance is also short.

There is also a magnetic resonance-based wireless charging method among the various wireless charging methods. It enables wireless charging irrespective of a location of a receiving resonator by arranging coils of different phases, for example, 0 degree (°) and 90°, to face a wall through an in-phase double feeding method and generating a rotating magnetic field in a cylindrical and rectangular space.

### Disclosure of Invention

### Technical Goals

Example embodiments provide technology for generating an available charging area in a three-dimensional (3D) space by arranging transmitting coils on a two-dimensional (2D) plane.

### Technical Solutions

According to an example embodiment, there is provided a wireless charging method including receiving a current by a plurality of transmitting coils and generating, by the transmitting coils, a three-dimensional (3D) wireless charging area that is available for wireless charging in a 3D space using a rotating magnetic field and a vertical magnetic field. The transmitting coils may be arranged in a circular form on a two-dimensional (2D) plane.

The receiving may include receiving a first in-phase current by a transmitting coil pair among the transmitting coils and receiving a second in-phase current by another transmitting coil pair among the transmitting coils. The first in-phase current and the second in-phase current may have different phases from each other.

The transmitting coils may be arranged at uniform intervals therebetween, and the transmitting coil pair and the other transmitting coil pair may be arranged facing each other in symmetry with each other.

The transmitting coils may be arranged vertical or horizontal to the 2D plane.

In response to a number of transmitting coil pairs among the transmission pairs being n, the first in-phase current and the second in-phase current may have a phase difference of π/n.

The wireless charging method may further include controlling, by a transmission inverter, at least one of a magnitude or a phase of the current to be output to the transmitting coils.

Transmitting coils of at least one of the transmitting coil pair or the other transmitting coil pair may be connected in parallel or in series.

According to another example embodiment, there is provided a wireless charging apparatus including a transmission inverter and a plurality of transmitting coils configured to generate a 3D wireless charging area available for wireless charging in a 3D space by generating a rotating magnetic field and a vertical magnetic field in response to a current output from the transmission inverter. The transmitting coils may be arranged in a circular form on a 2D plane.

The transmission inverter may output a first in-phase current to a transmitting coil pair among the transmitting coils, and output a second in-phase current to another transmitting coil pair among the transmitting coils. The first in-phase current and the second in-phase current may have different phases from each other.

The transmitting coils may be arranged at uniform intervals therebetween, and the transmitting coil pair and the other transmitting coil pair may be arranged facing each other in symmetry with each other.

The transmitting coils may be arranged vertical or horizontal to the 2D plane.

In response to a number of transmitting coil pairs among the transmitting coils being n, the first in-phase current and the second in-phase current may have a phase difference of π/n.

The transmission inverter may control at least one of a magnitude or a phase of the current to be output to the transmitting coils.

Transmitting coils of at least one of the transmitting coil pair or the other transmitting coil pair may be connected in parallel or in series.

The wireless charging apparatus may further include a matching capacitor arranged between at least one of the transmitting coils and the transmission inverter for resonance of the transmitting coils.

The transmission inverter may use, as a matching frequency, a frequency lower than a resonant frequency between the transmitting coils and the matching capacitor.

A form of the transmitting coils may include a planar helical structure, a 3D helical structure, a circular coil, and a polygonal coil, and a solenoid.

The 2D plane may include a magnetic material and a steel plate structure installed under the magnetic material. The magnetic material may include ferrite.

### Brief Description of Drawings

FIG. 1 is a diagram illustrating an example of a wireless charging apparatus according to an example embodiment.
FIG. 2 is a diagram illustrating an example of an arrangement of transmitting coils illustrated in FIG. 1 and an available three-dimensional (3D) wireless charging area that is to be generated by such an arrangement.
FIG. 3 is a diagram illustrating an example size of a coil that is provided to describe a charging efficiency based on a size of a transmitting coil and a size of a receiving coil.
FIG. 4 is a diagram illustrating an example of application of a current to the transmitting coils illustrated in FIG. 2.
FIG. 5 is a diagram illustrating an example of a connection between a transmission inverter and the transmitting coils illustrated in FIG. 1.
FIG. 6 is a diagram illustrating another example of a connection between the transmission inverter and the transmitting coils illustrated in FIG. 1.
FIG. 7 is a diagram illustrating an example of at least three pairs of the transmitting coils illustrated in FIG. 1.
(a), (b), (c), (d), (e), and (f) of FIG. 8 are diagrams illustrating examples of simulation results obtained by performing simulations to verify a magnetic field distribution when an in-phase current flows in each transmitting coil pair illustrated in FIG. 2.
(a), (b), (c), (d), (e), and (f) of FIG. 9 are diagrams illustrating examples of simulation results obtained by performing simulations to verify a magnetic field distribution when currents of 0 degree (°) and 90° phases flow in each transmitting coil pair illustrated in FIG. 2.
(a) and (b) of FIG. 10 are diagrams illustrating examples of simulation results obtained by performing simulations to verify a magnetic flux density generated by the transmitting coils illustrated in FIG. 2.

### Best Mode for Carrying Out the Invention

The following detailed description is provided to assist the reader in gaining a comprehensive understanding of the methods, apparatuses, and/or systems described herein. The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

It should be understood, however, that there is no intent to limit this disclosure to the particular example embodiments disclosed. On the contrary, example embodiments are to cover all modifications, equivalents, and alternatives falling within the scope of the example embodiments.

Although terms such as first, second, A, B, (a), (b), and the like may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

A term "module" used herein may indicate hardware that may perform a function and operation of each of components described herein, a computer program code that may perform a certain function and operation, or an electronic recording medium equipped with a computer program code that may perform a certain function and operation, for example, a processor and a microprocessor.

In other words, the module may indicate hardware to perform technical features described herein and/or a functional and/or structural combination of software to operate the hardware.

Hereinafter, example embodiments will be described in detail with reference to the accompanying drawings. It should be understood, however, that there is no intent to limit this disclosure to the particular example embodiments described herein. Regarding the reference numerals assigned to the elements in the drawings, it should be noted that the same elements will be designated by the same reference numerals, wherever possible, even though they are shown in different drawings.

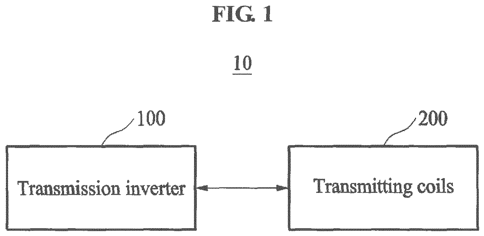

FIG. 1 is a diagram illustrating an example of a wireless charging apparatus according to an example embodiment.

Referring to FIG. 1, a wireless charging apparatus 10 includes a transmission inverter 100, and a plurality of transmitting coils 200. The wireless charging apparatus 10 may perform wireless charging using at least one of a magnetic induction-based wireless charging method or a magnetic resonance-based wireless charging method.

The wireless charging apparatus 10 may generate a charging area with an uniform energy density, which is an area available for wireless charging and will be hereinafter referred to as an available charging area, by arranging the transmitting coils 200 on a two-dimensional (2D) plane. For example, the wireless charging apparatus 10 may generate a three-dimensional (3D) space in which wireless charging is enabled, which will be hereinafter referred to as an available 3D wireless charging area, using a rotating magnetic field and a vertical magnetic field generated from the transmitting coils 200, thereby performing wireless charging irrespective of a location and a direction of a receiving coil.

The wireless charging apparatus 10 may perform wireless charging irrespective of a direction in which an electronic device is rotated within the available charging area. That is, the wireless charging apparatus 10 may perform wireless charging irrespective of a direction of a receiving device in an xyz space, not an xy plane.

The wireless charging apparatus 10 may provide wireless charging, or energy transfer, technology having a 3D degree of freedom (DoF) without a wall structure in a certain area. The wireless charging apparatus 10 may be used to overcome limitations of existing 2D pad structure and existing 3D wireless power transfer technology using such 3D wireless power transfer, and thus allow a user to easily and unrestrictedly use wireless charging and wireless power transfer technology.

The wireless charging apparatus 10 may perform wireless power transfer and wireless charging irrespective of a structure of a receiving coil of a receiver. The receiver may use at least two pairs of receiving coils, as shown in transmitting coils using at least two pairs thereof. However, when a size of each of the receiving coils decreases, a charging efficiency may be degraded.

The wireless charging apparatus 10 may perform wireless charging on a receiving coil of any structure, for example, a planar helical structure, a 3D helical structure, and a solenoid structure. In addition, the wireless charging apparatus 10 may also perform wireless charging when a receiving coil and a transmitting coil are arranged horizontally or vertically to each other, and also when they are arranged slantly at an oblique angle between them.

The wireless charging apparatus 10 may perform wireless charging for various information technology (IT)-related devices, for example, a laptop computer, a drone, an electrically-powered personal transportation means, a mobile phone, a smartphone, a tablet personal computer (PC), a mobile internet device (MID), a personal digital assistant (PDA), an enterprise digital assistant (EDA), a digital still camera, a digital video camera, a portable multimedia player (PMP), a personal or portable navigation device (PND), a handheld game console, an e-book, and other smart devices. The smart devices may include, for example, a smart watch, a smart band, and a smart ring.

The transmission inverter 100 may output a current to the transmitting coils 200. For example, the transmission inverter 100 may output a first in-phase current to a transmitting coil pair among the transmitting coils 200, and a second in-phase current to another transmitting coil pair among the transmitting coils 200.

The first in-phase current and the second in-phase current may be different from each other in phase. In response to the first in-phase current and the second in-phase current being different, the transmitting coils 200 may generate the rotating magnetic field and the vertical magnetic field. For example, such an out-of-phase current may be a quadrature signal.

The transmission inverter 100 may control at least one of a magnitude or a phase of the current to be output to the transmitting coils 200. For example, the transmission inverter 100 may be provided as at least two transmission inverters.

A signal output from the transmission inverter 100 may be a quadrature signal.

The wireless charging apparatus 10 may detect reception power transmitted to the receiver based on a change in a location of the receiver, and output information associated with the detected reception power to the transmission inverter 100. The transmission inverter 100 may then control transmission power based on the information associated with the reception power. For example, in response to the reception power being in a normal state, the transmission inverter 100 may complete transmitting and charging power.

In response to the current being output from the transmission inverter 100, the transmitting coils 200 may generate the rotating magnetic field and the vertical magnetic field, and generate the available 3D wireless charging area.

The transmitting coils 200 may include a plurality of transmitting coil pairs. The transmitting coils 200 may be arranged in a circular form on the 2D plane. The transmitting coils 200 may be arranged vertically or horizontally to the 2D plane.

The transmitting coils 200 may be arranged at uniform intervals therebetween, and a transmitting coil pair and another transmitting coil pair may be arranged facing each other in symmetry with each other. In addition, the transmitting coils 200 may be arranged to overlap one another, or not to overlap one another.

In a case in which a distance between the transmitting coils 200 increases, a null point may be generated at a center of the 2D plane on which the transmitting coils 200 are arranged. In such a case, a stand structure such as a pole may be installed at a center of the wireless charging apparatus 10.

In a case in which the number of the transmitting coil pairs is n, the first in-phase current and the second in-phase current that are output from the transmission inverter 100 may have a phase difference of π/n. That is, in a case in which the wireless charging apparatus 10 uses at least two transmitting coil pairs having a high quality factor (Q), each of transmission coils of the transmitting coil pairs may receive n currents having 0 degree (°) and 180/n° phases that are output from the transmission inverter 100.

For example, in a case in which two transmitting coil pairs are used, the wireless charging apparatus 10 may output a 0° phase current to one transmitting coil pair, and a 90° phase current to the other transmitting coil pair through the transmission inverter 100. Here, by arranging transmitting coils facing each other in the transmitting coil pairs to allow directions of currents of the transmitting coils to be opposite to each other, the wireless charging apparatus 10 may then generate a magnetic field of an orthogonal component, and such a magnetic field may have a characteristic of the rotating magnetic field.

Thus, although transmitting coils are arranged, not facing a wall surface, on the 2D plane, the wireless charging apparatus 10 may generate the available charging area in the 3D space, and thus perform wireless charging irrespective of a location and a direction of a receiving coil.

As described above, although the transmitting coils 200 are arranged on the 2D plane, the wireless charging apparatus 10 may secure a DoF and provide a user with a convenient and unrestricted wireless charging environment, and also expand the available charging area while maintaining an efficiency required for charging.

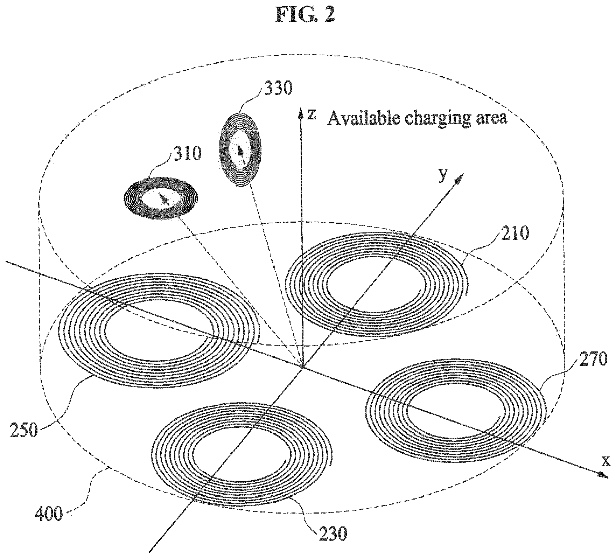

FIG. 2 is a diagram illustrating an example of an arrangement of transmitting coils illustrated in FIG. 1 and an available 3D wireless charging area generated by such an arrangement.

Referring to FIG. 2, an in-phase current may flow in a transmitting coil pair of which transmitting coils face each other among a plurality of transmitting coils 210, 230, 250, and 270 that are arranged at locations orthogonal to one another. By applying currents having 0° and 90° phases to the transmitting coils 210, 230, 250, and 270 arranged as illustrated in FIG. 2, a 3D rotating magnetic field and/or vertical magnetic field may be generated.

The wireless charging apparatus 10 may arrange the transmitting coils 210, 230, 250, and 270 in a planar form, and also generate an available 3D charging area 400. Thus, the wireless charging apparatus 10 may perform wireless charging when receiving coils 310 and 330 are parallel to the transmitting coils 210, 230, 250, and 270, and also when the receiving coils 310 and 330 are vertical to the transmitting coils 210, 230, 250, and 270.

The available 3D charging area 400 may include an available charging area corresponding to a 2D plane on which the transmitting coils 210, 230, 250, and 270 are arranged, and an available charging area corresponding to a vertical magnetic field generated from the transmitting coils 210, 230, 250, and 270. For example, the available 3D charging area 400 may be in a hemispherical shape or a cylindrical shape.

The transmitting coils 210, 230, 250, and 270 may be uniformly arranged, and thus an area of the available 3D charging area 400 in which efficiency may be reduced may be removed. For example, 2n or more transmitting coils may be uniformly arranged in a circular form to remove such an area in which efficiency may be reduced, and the transmission inverter 100 may input a signal having a phase difference of π/n between neighboring transmitting coils to each of the transmitting coils.

For example, the transmission inverter 100 may output a current having a 0° phase to a transmitting coil pair including the transmitting coils 210 and 230, and a current having a 90° phase to another transmitting coil pair including the transmitting coils 250 and 270.

In addition, the wireless charging apparatus 10 may install a column at a center of the 2D plane on which the transmitting coils 210, 230, 250, and 270 are arranged, and perform wireless charging with a receiving coil standing on the column. Here, the center of the 2D plane is where a null point may occur.

A form of the transmitting coils 200 may be a planar helical structure, a 3D helical structure, a circular coil and a polygonal coil, and a solenoid. For example, using the planar helical structure, a transmitting coil with an extremely low height may be produced. Although an example of the transmitting coils 200, which is provided as the four transmitting coils 210, 230, 250, and 270, is described above with reference to FIG. 2, the number of the transmitting coils 200 may be more than four.

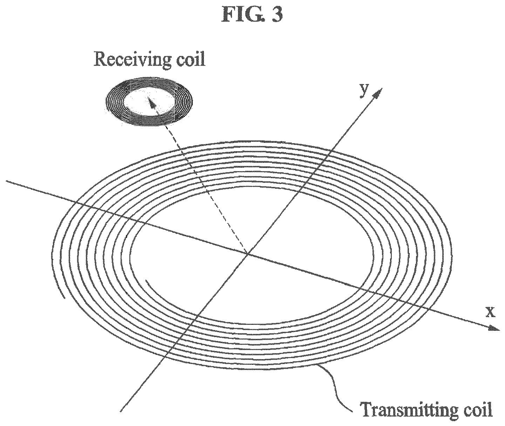

FIG. 3 is a diagram illustrating an example size of a coil that is provided to describe a charging efficiency based on a size of a transmitting coil and a size of a receiving coil.

Referring to FIG. 3, in a case in which a single large transmitting coil is used, a charging efficiency may be considerably degraded because a size of a receiving coil is relatively smaller than a size of the transmitting coil. Thus, to obtain a desirable efficiency, the receiving coil and the transmitting coil may need to be produced not to be greatly different in size. In this case, the available charging area 400 may be reduced.

When the receiving coil and the transmitting coil are produced as illustrated in FIG. 3, the available charging area 400 may be reduced, and also charging may not be enabled with the receiving coil being arranged vertically. Thus, by arranging the transmitting coils 210, 230, 250, and 270 having same sizes on the 2D plane as illustrated in FIG. 2, the charging efficiency may increase.

By changing a form of the transmitting coils 210, 230, 250, and 270 to an oval or rectangular form and increasing the number of transmitting coils, the available charging area 400 may be expanded and uniform transfer efficiency may also be achieved irrespective of a location.

The 2D plane may include a magnetic material and a steel plate structure installed under the magnetic material such that the transmitting coils 210, 230, 250, and 270 may have a high Q value and a high inductance value. The magnetic material may include, for example, ferrite.

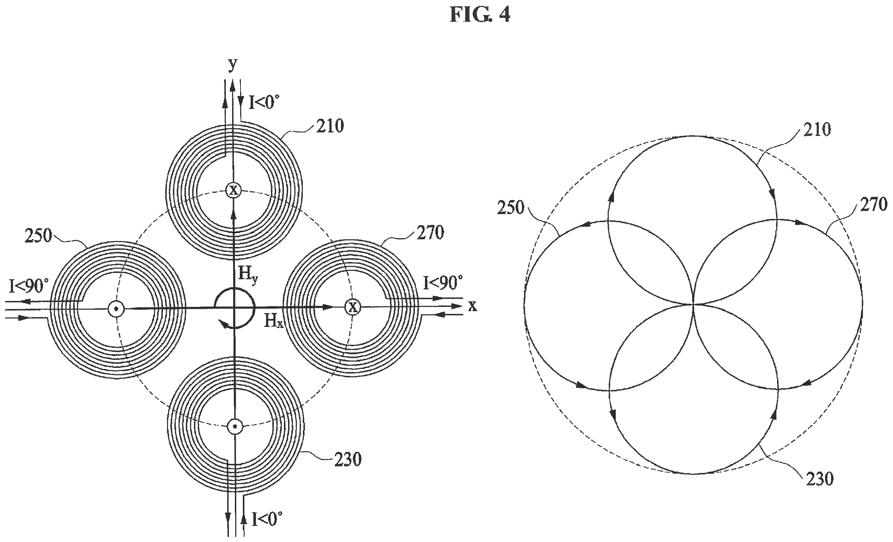

FIG. 4 is a diagram illustrating an example of application of a current to the transmitting coils illustrated in FIG. 2.

Referring to FIG. 4, the transmitting coils 210 and 230 arranged on a y axis may receive a current having a 0° phase, and the transmitting coils 250 and 270 arranged on an x axis may receive a current having a 90° phase.

A rotating magnetic field that is horizontal to the 2D plane on which the transmitting coils 210, 230, 250, and 270 are arranged may be generated from the transmitting coils 210, 230, 250, and 270 in a direction from the current having the 0° phase to the current having the 90° phase.

In a case in which a current flows clockwise in the two transmitting coils 210 and 270 based on a direction in which coils are wound, a vertical magnetic field generated from the transmitting coils 210 and 270 may be directed inwards. In a case in which a current flows counterclockwise in the two transmitting coils 230 and 250 based on a direction in which coils are wound, a vertical magnetic field generated from the transmitting coils 230 and 250 may be directed outwards.

That is, the vertical magnetic fields of the transmitting coils 210 and 230 facing each other may be connected to each other, and generate a magnetic field vertical to the 2D plane, for example, a rotating magnetic field. Similarly, the vertical magnetic fields of the transmitting coils 230 and 250 facing each other may be connected to each other, and generate a magnetic field vertical to the 2D plane, for example, a rotating magnetic field.

Thus, the transmitting coils 210, 230, 250, and 270 may also generate a 3D rotating magnetic field through a coil arrangement in a 2D plane structure, in lieu of a 3D structure.

Through such a 3D rotating magnetic field, the transmitting coils 210, 230, 250, and 270 may perform wireless charging for receiving coils at all locations and in all directions within the available charging area 400, in addition to receiving coils being vertical or horizontal.

Further, a wireless charging efficiency may be improved by increasing the number of the transmitting coils 200.

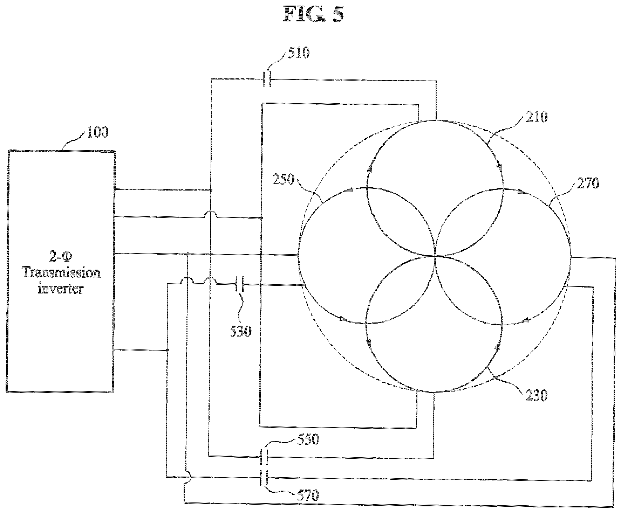

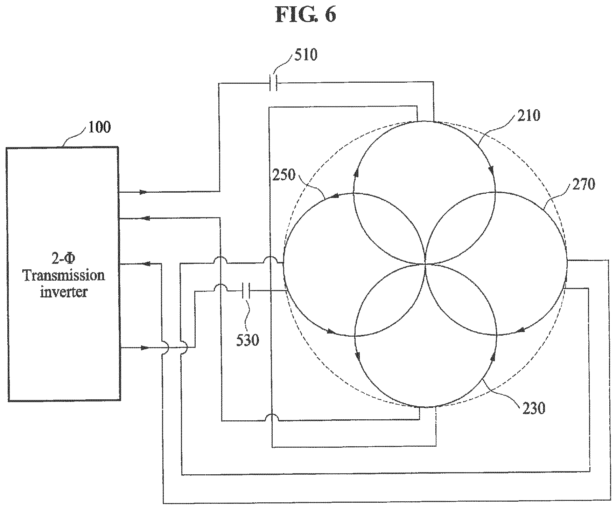

FIG. 5 is a diagram illustrating an example of a connection between the transmission inverter and the transmitting coils illustrated in FIG. 1. FIG. 6 is a diagram illustrating another example of a connection between the transmission inverter and the transmitting coils illustrated in FIG. 1.

Referring to FIG. 5, the transmission inverter 100 may output a current to the transmitting coils 210, 230, 250, and 270. The transmission inverter 100 may control a phase and a magnitude of the current to be output. The transmission inverter 100 may selectively output currents having different phases and magnitudes to the transmitting coils 210, 230, 250, and 270.

For example, the transmission inverter 100 may output a current having a 0° phase to a transmitting coil pair including the transmitting coils 210 and 230, and a current having a 90° phase that is orthogonal to the current of the 0° phase to another transmitting coil pair including the transmitting coils 250 and 270. Here, the currents having a same magnitude may be used.

The transmission inverter 100 may adjust a magnitude and a phase of a current to generate a uniform magnetic field in the available charging area 400, or generate a magnetic field that is robust only in a certain direction.

The transmission inverter 100 may control a magnitude and a phase of a current using an amplifier of class-D, E, and F with a desirable efficiency.

The wireless charging apparatus 10 may include a plurality of matching capacitors 510, 530, 550, and 570 that are arranged between at least one transmitting 0 resonance of the transmitting coils 210, 230, 250, and 270.

The transmission inverter 100 may use, as a matching frequency, a frequency lower than a resonant frequency between the transmitting coils 210, 230, 250, and 270 and the matching capacitors 510, 530, 550, and 570. The resonant frequency used herein may refer to an operating frequency. For example, the transmission inverter 100 may perform matching at a frequency 15 to 20% lower than the resonant frequency to prevent an over current from flowing in the transmitting coils 210, 230, 250, and 270 and also prevent an explosion of the transmission inverter 100. The resonant frequency may be 140 kilohertz (kHz), and the matching frequency used by the transmission inverter 100 may be 120 kHz.

Among the transmitting coils 210, 230, 250, and 270, transmitting coils included in at least one of one transmitting coil pair or the other transmitting coil pair may be connected in parallel or in series.

For example, the transmitting coils 210 and 230 included in one transmitting coil pair and the transmitting coils 250 and 270 included in the other transmitting coil pair may be connected in parallel as illustrated in FIG. 5, and the transmitting coils 210 and 230 included in one transmitting coil pair and the transmitting coils 250 and 270 included in the other transmitting coil pair may be connected in series as illustrated in FIG 6. In a case of a series connection as illustrated in FIG 6, an effect that is the same as in a parallel connection as illustrated in FIG. 5 may be achieved by adjusting an inductance of a coil.

Through such connections illustrated in FIGS. 5 and 6, the transmission inverter 100 may set a direction of a current to be a direction in which a magnetic flux is not canceled or offset.

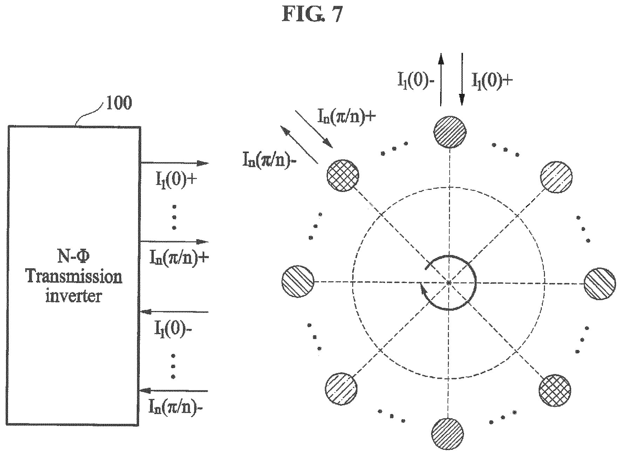

FIG. 7 is a diagram illustrating an example of at least three pairs of the transmitting coils illustrated in FIG. 1.

Referring to FIG. 7, the wireless charging apparatus 10 may increase a charging efficiency by reducing a size of each of the transmitting coils 200 and increasing the number of the transmitting coils 200, and minimizing an overlapping area of the transmitting coils 200. In such an example, 2n may be used as the number of the transmitting coils 200 for geometric symmetry. Here, currents flowing in n transmitting coil pairs may have a phase difference of π/n.

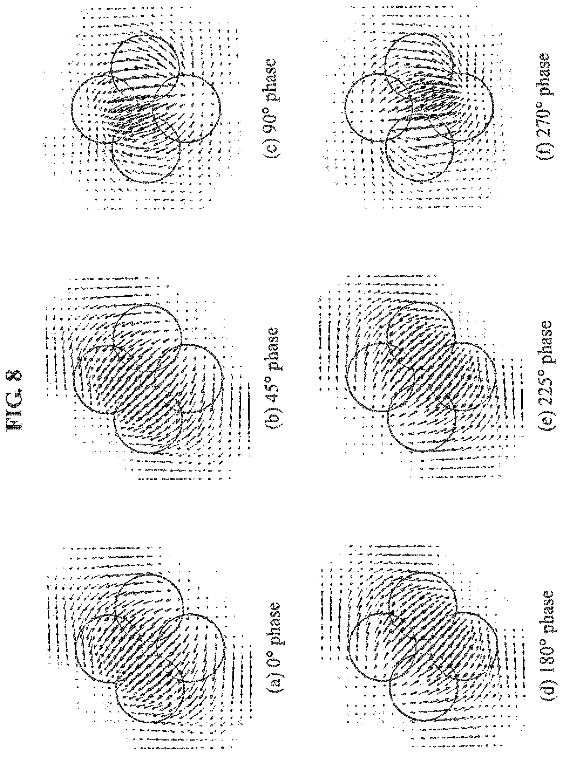

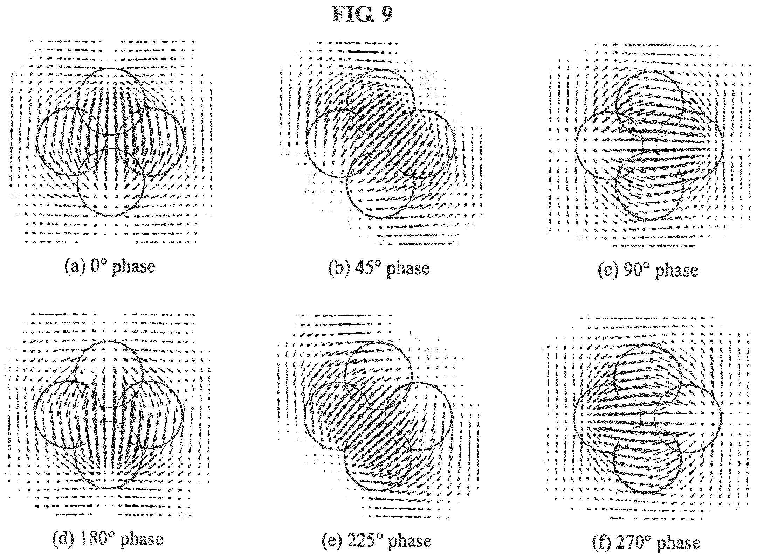

(a), (b), (c), (d), (e), and (f) of FIG. 8 are diagrams illustrating examples of simulation results obtained by performing simulations to verify a magnetic field distribution when an in-phase current flows in each transmitting coil pair illustrated in FIG. 2. (a), (b), (c), (d), (e), and (f) of FIG. 9 are diagrams illustrating examples of simulation results obtained by performing simulations to verify a magnetic field distribution when currents of 0° and 90° phases flow in each transmitting coil pair illustrated in FIG. 2.

Referring to FIG. 8, in a case in which the transmission inverter 100 outputs an in-phase current to the transmitting coils 210, 230, 250, and 270 of FIG. 2, the transmitting coils 210, 230, 250, and 270 may not form a uniform magnetic field, but generate a null point to generate an area in which charging is not enabled.

Referring to FIG. 9, a phase difference between a current output from the transmission inverter 100 to a transmitting coil pair including the transmitting coils 210 and 230, and a current output from the transmission inverter 100 to another transmitting coil pair including the transmitting coils 250 and 270 may be 90°.

As a result of the simulations, the transmitting coils 210, 230, 250, and 270 may form a uniform magnetic field, or a rotating magnetic field, within the available charging area 400 despite a difference in phases of currents output from the transmission inverter 100. In such a case, the transmitting coils 210, 230, 250, and 270 may not generate a null point, and thus the wireless charging apparatus 10 may perform wireless charging irrespective of a direction of a receiver.

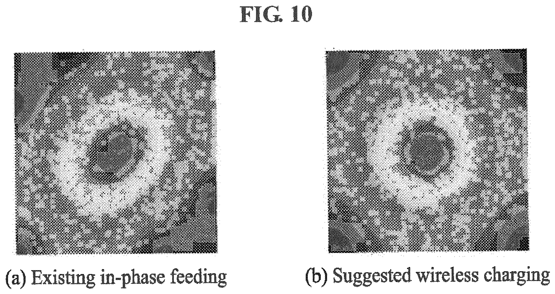

(a) and (b) of FIG. 10 are diagrams illustrating examples of simulation results obtained by performing simulations to verify a magnetic flux density generated by the transmitting coils illustrated in FIG. 2.

(a) of FIG. 10 illustrates a magnetic flux density obtained when the transmission inverter 100 outputs an in-phase current to the transmitting coils 210, 230, 250, and 270, and (b) of FIG. 10 illustrates a magnetic flux density obtained when the transmission inverter 100 outputs a current to one transmitting coil pair including the transmitting coils 210 and 230 and a different current to another transmitting coil pair including the transmitting coils 250 and 270. The currents used herein have a phase difference of 90°.

As a result, it is verified that a magnetic flux density in a case in which the current flowing in the one transmitting coil pair and the current flowing in the other transmitting coil pair have the phase difference of 90° is more uniform compared to a magnetic flux density in a case in which the in-phase current flows.

The units described herein may be implemented using hardware components and software components. For example, the hardware components may include microphones, amplifiers, band-pass filters, audio to digital convertors, non-transitory computer memory and processing devices. A processing device may be implemented using one or more general-purpose or special purpose computers, such as, for example, a processor, a controller and an arithmetic logic unit (ALU), a digital signal processor, a microcomputer, a field programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums. The non-transitory computer readable recording medium may include any data storage device that can store data which can be thereafter read by a computer system or processing device.

Example embodiments include non-transitory computer-readable media including program instructions to implement various operations embodied by a computer. The media may also include, alone or in combination with the program instructions, data files, data structures, tables, and the like. The media and program instructions may be those specially designed and constructed for the purposes of example embodiments, or they may be of the kind well known and available to those having skill in the computer software arts. Examples of non-transitory computer-readable media include magnetic media such as hard disks, floppy disks, and magnetic tape; optical media such as CD ROM disks; magneto-optical media such as floptical disks; and hardware devices that are specially configured to store and perform program instructions, such as read-only memory devices (ROM) and random access memory (RAM). Examples of program instructions include both machine code, such as produced by a compiler, and files containing higher level code that may be executed by the computer using an interpreter. The described hardware devices may be configured to act as one or more software modules in order to perform the operations of the above-described example embodiments, or vice versa.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents.

Therefore, the scope of the disclosure is defined not by the detailed description, but by the claims and their equivalents, and all variations within the scope of the claims and their equivalents are to be construed as being included in the disclosure.

## Claims

1. A wireless charging method comprising:
receiving a current by a plurality of transmitting coils; and
generating, by the transmitting coils, a three-dimensional (3D) wireless charging area that is available for wireless charging in a 3D space using a rotating magnetic field and a vertical magnetic field,
wherein the transmitting coils are arranged in a circular form on a two-dimensional (2D) plane.

2. The wireless charging method of claim 1, wherein the receiving comprises:
receiving a first in-phase current by a transmitting coil pair among the transmitting coils; and
receiving a second in-phase current by another transmitting coil pair among the transmitting coils,
wherein the first in-phase current and the second in-phase current have different phases from each other.

3. The wireless charging method of claim 2, wherein the transmitting coils are arranged at uniform intervals therebetween, and
the transmitting coil pair and the other transmitting coil pair are arranged facing each other in symmetry with each other.

4. The wireless charging method of claim 1, wherein the transmitting coils are arranged vertical or horizontal to the 2D plane.

5. The wireless charging method of claim 2, wherein, in response to a number of transmitting coil pairs among the transmission pairs being n, the first in-phase current and the second in-phase current have a phase difference of π/n.

6. The wireless charging method of claim 1, further comprising:
controlling, by a transmission inverter, at least one of a magnitude or a phase of the current to be output to the transmitting coils.

7. The wireless charging method of claim 2, wherein transmitting coils of at least one of the transmitting coil pair or the other transmitting coil pair are connected in parallel or in series.

8. A wireless charging apparatus comprising:
a transmission inverter; and
a plurality of transmitting coils configured to generate a three-dimensional (3D) wireless charging area available for wireless charging in a 3D space by generating a rotating magnetic field and a vertical magnetic field in response to a current output from the transmission inverter,
wherein the transmitting coils are arranged in a circular form on a two-dimensional (2D) plane.

9. The wireless charging apparatus of claim 8, wherein the transmission inverter is configured to output a first in-phase current to a transmitting coil pair among the transmitting coils, and
output a second in-phase current to another transmitting coil pair among the transmitting coils,
wherein the first in-phase current and the second in-phase current have different phases from each other.

10. The wireless charging apparatus of claim 9, wherein the transmitting coils are arranged at uniform intervals therebetween, and
the transmitting coil pair and the other transmitting coil pair are arranged facing each other in symmetry with each other.

11. The wireless charging apparatus of claim 8, wherein the transmitting coils are arranged vertical or horizontal to the 2D plane.

12. The wireless charging apparatus of claim 9, wherein, in response to a number of transmitting coil pairs among the transmitting coils being n, the first in-phase current and the second in-phase current have a phase difference of π/n.

13. The wireless charging apparatus of claim 8, wherein the transmission inverter is configured to control at least one of a magnitude or a phase of the current to be output to the transmitting coils.

14. The wireless charging apparatus of claim 9, wherein transmitting coils of at least one of the transmitting coil pair or the other transmitting coil pair are connected in parallel or in series.

15. The wireless charging apparatus of claim 8, further comprising:
a matching capacitor arranged between at least one of the transmitting coils and the transmission inverter for resonance of the transmitting coils.

16. The wireless charging apparatus of claim 15, wherein the transmission inverter is configured to use, as a matching frequency, a frequency lower than a resonant frequency between the transmitting coils and the matching capacitor.

17. The wireless charging apparatus of claim 8, wherein a form of the transmitting coils includes a planar helical structure, a 3D helical structure, a circular coil, and a polygonal coil, and a solenoid.

18. The wireless charging apparatus of claim 8, wherein the 2D plane includes a magnetic material and a steel plate structure installed under the magnetic material.
